# EUROPEAN PATENT APPLICATION

(11) **EP 3 760 434 A1**
(43) Date of publication of application: **06.01.2021**
(21) Application number: 19760561.1
(22) Date of filing: 25.02.2019
(51) Int. Cl.: B32B 7/027, B32B 37/26, B60J 1/00, C03C 27/12, G02B 5/22, G02B 5/26, G02B 5/28

(54) **HEAT RAY SHIELDING STRUCTURE, LAMINATED GLASS INCLUDING SAME, AND MANUFACTURING METHOD THEREOF**

(30) Priority: 27.02.2018 JP 2018032984
(71) Applicant: Nippon Kayaku Kabushiki Kaisha, Tokyo 100-0005 (JP)
(72) Inventor: HOZUMI Yasuhiro, Tokyo 115-8588 (JP)
(74) Representative: Gille Hrabal
(86) International application number: PCT/JP2019/007116
(87) International publication number: WO 2019/167897

(57) **Abstract**

A heat ray shielding structure including a heat ray shielding layer (2) between a first resin layer and a second resin layer, wherein the heat ray shielding layer (2) is a heat ray reflecting layer which is a first heat ray reflecting layer having a repeated multilayer structure of a high-refractive-index layer and a low-refractive-index layer or which is a second heat ray reflecting layer containing at least any one of Au, Ag, Cu and Al, a heat ray absorbing layer containing at least one of an inorganic oxide and a coloring matter and containing a binder resin, or a layer including the heat ray reflecting layer and the heat ray absorbing layer.

## Description

### Technical Field

The present invention relates to a heat ray shielding structure having a heat ray shielding function used for reducing an increase in indoor temperature of a vehicle or a building caused by thermal radiation of sunlight, a laminated glass including the same, and a method for producing the same.

### Background Art

In recent years, from the standpoint of energy saving and global environmental problems, it has been required to reduce the load on air conditioning equipment. For example, in the fields of houses and automobiles, it has been performed to reduce a temperature increase in a room and in an office by attaching a heat ray shielding sheet (film) or the like capable of shielding heat rays from sunlight to a window glass or by supporting an intermediate layer having a heat ray shielding function between two sheets of glass.

For a method for imparting a heat ray shielding function to a window member, in Patent Document 1, it is proposed that a heat ray shielding function is imparted to an intermediate layer supported between glass and glass and it is exemplified to use a thermoplastic resin containing an heat ray absorbing material, which is absorptive, as the intermediate layer. However, because a heat ray absorbing material also absorbs visible-range lights, it is a problem that visible light transmittance is impaired when the content of the material is increased in order to improve the heat ray shielding performance, so that it is difficult to realize a remarkable improvement in the heat ray shielding performance only by the use of the heat ray absorbing material.

Patent Document 2 exemplifies that an absorptive heat ray shielding layer is formed on a supporting substrate having releasability. Patent Document 3 exemplifies a method of forming a reflective shielding layer containing silver tabular particles in a resin and peeling off the substrate having releasability after the layer is adhered to an adhesive resin layer to transfer the heat ray shielding layer. The resulting one is excellent in transparency because it does not use a supporting substrate. However, since it does not have a multilayer structure of a heat ray absorbing layer and/or a heat ray reflecting layer, and it is a problem that the heat ray shielding function is not sufficient in the case of the heat ray absorbing layer alone or the heat ray reflecting layer alone.

Patent Document 4 discloses a laminated glass for windows having an inner glass sheet, a first resin layer, an infrared ray reflecting film, a second resin layer, and an outer glass sheet in this order. The film has a thin film-like structure in itself after formed, and has a self-supportability. Since the film itself has a heat ray shielding function, it is easy to handle it in the laminated glass manufacturing process. However, it cannot be handled as a film unless a material such as a base layer, polyethylene terephthalate or polymethyl methacrylate is used for achieving self-supportability. The material of the heat ray shielding layer is limited. Although a reflecting layer made of an organic material containing an absorbing material is disposed on the laminated glass for windows, the difference in refractive index is small due to the limitation of the material, and thus this fails to provide the heat ray shielding performance sufficiently unless the number of laminated layers is increased.

Patent Document 5 discloses an intermediate layer wherein a heat ray shielding film in which a heat ray reflecting layer composed of a high-refractive-index layer and a low-refractive-index layer is formed on a plastic substrate is disposed between two adhesive resin layers, and a heat ray shielding laminated glass wherein the intermediate layer is sandwiched between two sheets of glass. In these methods, it is expected to improve heat shielding performance since a layer configuration using various materials on a resin film substrate can be produced, and it is excellent in cost since the shielding layer can be continuously formed in a roll state. However, it has a disadvantage that transparency is deteriorated because a resin film, which is originally unnecessary for the heat ray shielding performance, is included as a supporting substrate in the configuration.

### Related Art

### Patent Document

Patent Document 1: JP-A-2001-151539
Patent Document 2: JP-A-2000-219543
Patent Document 3: Japanese Patent No. 5599639
Patent Document 4: Japanese Patent No. 4848872
Patent Document 5: WO2011/074425

### Summary of Invention

### Problems to Be Solved by the Invention

In order to improve the heat ray shielding performance without impairing transparency, it is preferable to form only a layer necessary for the heat ray shielding performance in the structure, but it is difficult to separate the layer having the heat ray shielding performance singly from the formed substrate. For this reason, in the prior art, in order to impart excellent heat ray shielding performance onto a material on which a heat ray shielding layer cannot be formed by wet or dry coating owing to solvent resistance, generation of outgas, or the like, it is necessary to use a film containing a supporting substrate or a base layer unnecessary for the heat ray shielding function in the structure. However, since the use of the film impairs transparency or restricts the materials, there is a need for a method that can easily additionally form only a layer having excellent heat ray shielding performance. Therefore, an object of the present invention is to provide a heat ray shielding structure and a laminated glass, which can easily provide an excellent heat ray shielding function without impairing transparency and visible light transmittance, with respect to impartment of a heat ray shielding function to a window material, and methods for producing a heat ray shielding structure and a laminated glass, which can significantly improve production costs.

### Means for Solving the Problems

As a result of intensive studies for solving the above-mentioned problems, the present inventors have completed the present invention. That is, the present invention relates to the following (1) to (7).
(1) A heat ray shielding structure comprising a heat ray shielding layer between a first resin layer and a second resin layer, wherein the heat ray shielding layer is a heat ray reflecting layer which is a first heat ray reflecting layer having a repeated multilayer structure of a high-refractive-index layer and a low-refractive-index layer or which is a second heat ray reflecting layer containing at least any one of Au, Ag, Cu and Al, a heat ray absorbing layer containing at least one of an inorganic oxide and a coloring matter and containing a binder resin, or a layer including the heat ray reflecting layer and the heat ray absorbing layer.
(2) A method for producing a heat ray shielding structure comprising the following steps: (A) a step of obtaining a first laminate by laminating a heat ray reflecting layer which is a first heat ray reflecting layer having a repeated multilayer structure of a high-refractive-index layer and a low-refractive-index layer or which is a second heat ray reflecting layer containing at least any one of Au, Ag, Cu and Al on a substrate having releasability, laminating a heat ray absorbing layer containing at least one of an inorganic oxide and a coloring matter and containing a binder resin, on the substrate having releasability, or laminating any one of the heat ray reflecting layer and the heat ray absorbing layer on the substrate having releasability and further laminating any another one of the heat ray reflecting layer and the heat ray absorbing layer on any one of the heat ray reflecting layer and the heat ray absorbing layer, (B) a step of obtaining a second laminate by attaching the heat ray reflecting layer or the heat ray absorbing layer of the first laminate obtained in the step (A) to a first resin layer and then peeling off the substrate having releasability to arrange the heat ray reflecting layer or the heat ray absorbing layer on the first resin layer, and (C) a step of obtaining a heat ray shielding structure by attaching the heat ray reflecting layer or the heat ray absorbing layer of the second laminate obtained in the step (B) to a second resin layer to arrange the heat ray reflecting layer or the heat ray absorbing layer on the second resin layer.
(3) A method for producing a heat ray shielding structure according to (2), wherein the substrate having releasability has a peeling force of 1000 mN/25 mm or more and 5000 mN/25 mm or less in a 180° peeling test at a speed of 300 mm/min between an adhesive tape having a width of 25 mm and the substrate having releasability.
(4) A laminated glass comprising a heat ray shielding structure in the configuration, the laminated glass comprising a first glass sheet, the heat ray shielding structure according to (1), and a second glass sheet in this order.
(5) A method for producing a laminated glass, comprising the steps (A), (B) and (C) according to (2) and further comprising the following step: (D) a step of arranging the heat ray shielding structure obtained in the step (C) according to (2) between a first glass sheet and a second glass sheet.
(6) The method for producing a laminated glass according to (5), wherein the substrate having releasability has a peeling force of 1000 mN/25 mm or more and 5000 mN/25 mm or less in a 180° peeling test at a speed of 300 mm/min between an adhesive tape having a width of 25 mm and the substrate having releasability.
(7) A window comprising the laminated glass according to (4).

### Effects of the Invention

The heat ray shielding structure of the present invention is comprehensively excellent in performance with respect to visible light transmittance, total solar radiation transmittance and haze. Further, using the method for producing a heat ray shielding structure according to the present invention allows for easily producing a structure having an excellent heat ray shielding function at low costs with a high flexibility in selecting materials necessary for imparting heat ray shielding performance and without significantly increasing the number of process steps. Furthermore, the heat ray shielding structure is excellent in heat ray shielding properties and transparency since the window material constituting the heat ray shielding structure of the present invention does not use a plastic supporting substrate.

### Brief Description of Drawings

FIG. 1 is a schematic view showing an example of a layer having a heat ray shielding function on a substrate having releasability.
FIG. 2 is a schematic view showing a laminated glass including the heat ray shielding structure A according to Example 1 in the configuration.
FIG. 3 is a schematic view showing a laminated glass including the heat ray shielding structure B according to Example 2 in the configuration.
FIG. 4 is a schematic view showing a laminated glass including the heat ray shielding structure C according to Comparative Example 1 in the configuration.
FIG. 5 is a schematic view showing a laminated glass including the structure D according to Comparative Example 2 in the configuration.

### Embodiments for Carrying Out the Invention

The following will describe embodiments of the present invention in detail.

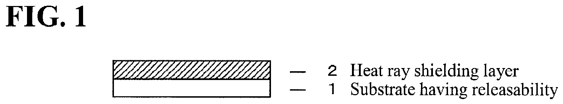

The heat ray shielding structure according to the present embodiment includes a heat ray shielding layer between a first resin layer and a second resin layer. The heat ray shielding layer in the present embodiment is provided as a layer having a heat ray shielding function on a substrate 1 having releasability as shown in FIG. 1 (heat ray shielding layer 2). A first laminate (FIG. 1) having a heat ray shielding layer 2 on a substrate 1 having releasability allows the heat ray shielding layer 2 to be easily transferred by continuously producing the laminate in a roll shape, adhering it to a window material, and then peeling off the substrate 1 having releasability. Thereby, the productivity of a laminated glass and a window can be improved.

The heat ray shielding layer may be composed of any one or both of a heat ray reflecting layer, which is a layer that reflects heat rays, and a heat ray absorbing layer, which is a layer that absorbs heat rays, or may have both functions of reflection and absorption by laminating these layers multiply. If necessary, a resin layer having adhesiveness may be provided on the top of the heat ray shielding layer. The thickness of the heat ray shielding layer is not limited, but is preferably larger than 0 µm and 50 µm or less from the standpoint of acquiring transparency. The heat ray shielding layer has a small layer thickness and is short of self-supportability, so that it is difficult to separate only the heat ray shielding layer and handle it alone as a film.

The substrate having releasability includes but is not limited to paper, plastic, or the like. The releasability is not limited as long as the layer having a heat ray shielding function to be formed on the substrate can be peeled off, and the presence or absence of a release agent is not limited. The scale of the releasability of the substrate having releasability is a peeling force in a 180° peeling test at a rate of 300 mm/min between an adhesive tape (product name: 31B, 25 mm width) manufactured by Nitto Denko Corporation and the substrate having releasability, and it is preferably 1000 mN/25 mm or more and 5000 mN/25 mm or less. Using a substrate having a peeling force of lower than 1000 mN/25 mm makes it difficult to produce the layer having a heat ray shielding function due to insufficient wetting of a coating solution on the substrate when producing a layer having a heat ray shielding function by wet coating. Using a substrate having a peeling force of higher than 5000 mN/25 mm makes it difficult to peel off due to the high adhesive force between the substrate having releasability and the layer having a heat ray shielding function.

The heat ray reflecting layer according to the present embodiment means a layer that reflects light having a wavelength of 780 nm to 2500 nm and does not transmit heat energy. However, "reflection" does not mean completely preventing light from transmitting. The heat ray reflecting layer may be a layer that reflects 15% or more of incident light having a wavelength of 780 nm to 2500 nm, and higher reflectivity is more preferable. The preferable reflectivity is 20% or more, more preferably 25% or more, and even more preferably 28% or more. As the layer that reflects light having a wavelength of 780 nm to 2500 nm, a heat ray reflecting layer having a repeated multilayer structure of a high-refractive-index layer and a low-refractive-index layer (herein also referred to as a first heat ray reflecting layer) or a heat ray reflecting layer containing at least any one of Au, Ag, Cu and Al (herein also referred to as a second heat ray reflecting layer) can be used.

More specifically, the repeated multilayer structure of the first heat ray reflecting layer is a structure in which a high-refractive-index layer and a low-refractive-index layer are alternately laminated, and the heat ray reflecting layer is constituted by two or more layers. The number of layers may be even or odd, and the high-refractive-index layer or the low-refractive-index layer may be placed in both of the lowermost layer and the uppermost layer of the heat ray reflecting layer. The first heat ray reflecting layer uses the principle of optical interference by lamination of dielectrics, and has an advantage that the reflection wavelength and the reflectivity can be easily controlled by the refractive index and the thickness of the layer. The lamination of dielectrics has an advantage that the refractive index can be easily adjusted because the structural materials can be widely selected. Here, the high-refractive-index layer includes, for example, a layer having a refractive index of 1.6 or more and 2.4 or less, preferably 1.7 or more and 2.2 or less, more preferably 1.8 or more and 2.0 or less. The low-refractive-index layer is a layer having a lower refractive index than that of the high-refractive-index layer, and it includes, for example, a layer having a refractive index of more than 0 and 1.5 or less, preferably more than 0 and 1.4 or less. Each value of the refractive index is a value at a wavelength of 550 nm. The larger difference between the refractive indices of the high-refractive-index layer and the low-refractive-index layer allows for more improving the maximum reflectivity, so that the number of lamination necessary for achieving the heat ray shielding performance can be reduced.

Here, the material of the high-refractive-index layer and the low-refractive-index layer is not limited. One having a suitable refractive index can be selected from metal oxides such as TiO2, Nb₂O₅, WO₃, MWO₃ (tungsten composite oxide), Ta₂O₅, SiO₂, Al₂O₃, ZrO₂, and MgF₂, and a layer can be formed from the one alone or by mixing it with a resin serving as a binder. Alternatively, an organic substance having a high refractive index or a low refractive index may be used alone without using the metal oxide. Further, if necessary, various additives such as a dispersant, a near-infrared absorbing coloring matter, an ultraviolet absorbent, an antioxidant, and a light stabilizer may be contained.

The content of fine particles of the above metal oxide or the like in the heat ray reflecting layer is preferably 40% by weight to 90% by weight based on the total amount of the heat ray reflecting layer.

The resin serving as the binder is not particularly limited as long as the resin can disperse and maintain the fine particles of the above-mentioned metal oxides therein. Usually, a thermoplastic resin and/or a cured product of a curable resin that is cured by heat or light (also referred to as a heat- or light-curable resin) (specifically, a thermosetting resin or a photocurable resin) may be mentioned. The content of the binder resin in the heat ray reflecting layer is preferably 10% by weight to 60% by weight based on the total amount of each heat ray reflecting layer.

The second heat ray reflecting layer is based on the principle of reflection generated by the electromagnetic wave shielding effect of free electrons of a metal conductor. The layer is composed of a metal single layer and is produced by dry coating such as vapor deposition or sputtering. Since a metal single layer allows for a high reflectivity, the number of coatings is small and thus the load on the manufacturing process can be reduced.

In the present embodiment, the heat ray absorbing layer means a layer that absorbs light having a wavelength of 780 nm to 2500 nm and does not transmit heat energy. However, "absorption" does not mean completely transmitting light. When the heat ray absorbing layer is combined with the heat ray reflecting layer, it is preferable to enable the heat ray absorbing layer to selectively absorb light having a wavelength of 780 nm to 2500 nm so that light in an infrared region which cannot be shielded by the heat ray reflecting layer can be shielded. The heat ray absorbing layer contains at least any one of an inorganic oxide and a coloring matter, and a binder resin. In other words, the heat ray absorbing layer includes a material that absorbs light having a wavelength of 780 nm to 2500 nm (heat ray absorbing material) as an essential component, and is formed of a mixture of it and a resin serving as a binder.

In the present embodiment, the material that absorbs light having a wavelength of 780 nm to 2500 nm is not limited. The material includes at least one selected from inorganic oxides such as ITO (tin-doped indium oxide), ATO (antimony-doped tin oxide), AZO (aluminum-doped zinc oxide), zinc oxide, tungsten composite oxide, antimony-doped zinc oxide and lanthanum hexaboride, and coloring matters. The coloring matter may be any of inorganic and organic dyes and pigments, and is not limited. Further, as the inorganic pigments, for example, cobalt-based coloring matters, iron-based coloring matters, chromium-based coloring matters, titanium-based coloring matters, vanadium-based coloring matters, zirconium-based coloring matters, molybdenum-based coloring matters, ruthenium-based coloring matters, and the like can be used. As the organic pigments and organic dyes, for example, diimonium-based coloring matters, anthraquinone-based coloring matters, aminium-based coloring matters, cyanine-based coloring matters, merocyanine-based coloring matters, croconium-based coloring matters, squarylium-based coloring matters, azulenium-based coloring matters, polymethine-based coloring matters, naphthoquinone-based coloring matters, pyrylium-based coloring matters, phthalocyanine-based coloring matters, naphthalocyanine-based coloring matters, naphtholactam-based coloring matters, azo-based coloring matters, condensed azo-based coloring matters, indigo-based coloring matters, perinone-based coloring matters, and the like can be used. In order to improve the heat ray shielding performance without impairing the visible light transmittance, a coloring matter having no maximum absorption at a wavelength range of 500 nm to 600 nm is preferable.

The content of the inorganic oxide and the coloring matter in the heat ray absorbing layer is preferably 5% by weight to 75% by weight based on the total amount of the heat ray absorbing layer.

The binder resin to be used in the present embodiment is not limited, but a thermoplastic resin such as an acrylic, epoxy, polyolefin, polyurethane, and polyester resin, an ultraviolet-curable resin such as an acrylate and epoxy resin, or a thermosetting resin such as a polyurethane, epoxy, and polyolefin resin can be used. From the standpoint of productivity, a thermoplastic resin or an ultraviolet-curable resin is preferable. The thickness of the layer that absorbs heat rays is not limited but is preferably 50 µm or less, since productivity is impaired when it is too thick. The content of the binder resin in the heat ray absorbing layer is preferably 25% by weight to 95% by weight based on the total amount of the heat ray absorbing layer.

The first resin layer and the second resin layer are preferably a highly transparent resin that may be used as a window member, for example, PVB (polyvinyl butyral), polycarbonate, an acrylic resin such as PMMA (polymethyl methacrylate), triacetyl cellulose, cycloolefin, polyvinyl acetal and ethylene-vinyl acetate copolymer like an intermediate layer for windows, and the like, but are not limited thereto as long as the resin has high transparency. Alternatively, a laminate thereof may be used. Among the above, the first resin layer and the second resin layer are more preferably composed of PVB (polyvinyl butyral), polycarbonate, and an acrylic resin such as PMMA (polymethyl methacrylate). The first resin layer and the second resin layer may have adhesiveness. Further, the first resin layer and the second resin layer may contain an additive. Examples of the additive include fine particles for heat ray shielding, fine particles for sound insulation and a plasticizer. Examples of the fine particles for heat ray shielding and the fine particles for sound insulation include inorganic fine particles and metal fine particles. The addition amount of the fine particles in the first resin layer and the second resin layer is not limited but is preferably 0.1 to 10 parts by weight based on 100 parts by weight of the resin component.

A resin layer having adhesiveness which may be provided between the heat ray shielding layer and the first resin layer or the second resin layer as needed includes a layer formed of a thermoplastic resin, an ultraviolet-curable resin, or a thermosetting resin. Specifically, the thermoplastic resin includes polyvinyl acetal, ethylene-vinyl acetate copolymer, polyester, polymethyl methacrylate, polycarbonate, polyurethane, polyolefin and polycycloolefin. The ultraviolet-curable resin includes but not limited to ultraviolet-curable acrylates and ultraviolet-curable epoxy resins, and the thermosetting resin includes but not limited to an acrylic resin, urethane resin, and epoxy resin.

In the heat ray shielding structure of the present embodiment, arranging only the heat ray shielding layer and an optional resin layer having adhesiveness between the first resin layer and the second resin layer allows for reducing the materials to be used and thus the case is preferable from the viewpoint of production and transparency. That is, including no supporting substrate for supporting the heat ray shielding layer allows for improving production efficiency and transparency. In the heat ray shielding structure of the present embodiment, arranging only the heat ray shielding layer between the first resin layer and the second resin layer allows for reducing the materials to be used and thus the case is more preferable from the viewpoint of production and transparency.

In addition, from the above viewpoint, a configuration in which the heat ray shielding structure of the present embodiment does not include a supporting substrate (for example, PET or the like) is also a preferable embodiment.

The laminated glass according to the present embodiment has a first glass sheet, the above-described heat ray shielding structure, and a second glass sheet in this order. The window according to the present embodiment includes the above laminated glass. The first glass sheet and the second glass sheet may be the same or different, and the embodiment is not limited.

The first glass sheet and the second glass sheet may be glass having no curvature or curved glass. The two glass sheets may be different in thickness or may be colored. In particular, when the laminated glass is used as a windshield of an automobile for the purpose of heat insulation, a coloring component such as a metal may be mixed into the glass sheet so that the visible light transmittance of the laminated glass does not fall below 70% that is specified in JIS R 3211. In general, the heat insulation can be effectively improved by using green glass as the glass sheet. The color density of the green glass is preferably adjusted to a density suitable for the purpose by controlling the amount of a metal component to be added or by controlling the thickness. The visible light transmittance of the green glass of the present embodiment is preferably 70% or more, more preferably 75% or more, and further preferably 80% or more. In order to make the hue more preferable in appearance, the value of b* of the laminated glass in the L*a*b* color system is preferably 10 or less, more preferably 8 or less. When the b* value is larger than 10, the hue will be unpleasant and the case is not preferable. Moreover, the visible light transmittance of the laminated glass of the present embodiment is preferably 70% or more, more preferably 75% or more, and further preferably 80% or more. In order to make the hue more preferable in appearance, the value of b* of the laminated glass in the L*a*b* color system is preferably 10 or less, more preferably 8 or less. When the b* value is larger than 10, the hue will be unpleasant, and the case is not preferable.

The method for manufacturing a heat ray shielding structure according to the present embodiment includes the following steps (A), (B) and (C).
(A) a step of obtaining a first laminate by:
   laminating a heat ray reflecting layer which is a first heat ray reflecting layer or a second heat ray reflecting layer on a substrate having releasability,
   laminating a heat ray absorbing layer on a substrate having releasability, or
   laminating any one of a heat ray reflecting layer and a heat ray absorbing layer on the substrate having releasability and further laminating any another one of the heat ray reflecting layer and the heat ray absorbing layer on any one of the heat ray reflecting layer and the heat ray absorbing layer,
(B) a step of obtaining a second laminate by attaching the heat ray reflecting layer or the heat ray absorbing layer of the first laminate obtained in the step (A) to a first resin layer and then peeling off the substrate having releasability to arrange the heat ray reflecting layer or the heat ray absorbing layer on the first resin layer, and
(C) a step of obtaining a heat ray shielding structure by attaching the heat ray reflecting layer or the heat ray absorbing layer of the second laminate obtained in the step (B) to a second resin layer to arrange the heat ray reflecting layer or the heat ray absorbing layer on the second resin layer.
   When both of the heat ray reflecting layer and the heat ray absorbing layer are laminated on the substrate having releasability, the order of lamination is not limited.
   The method for manufacturing a laminated glass according to the present invention includes the above steps (A), (B) and (C) and further includes the following step:
(D) a step of arranging the heat ray shielding structure obtained in the above step (C) between a first glass sheet and a second glass sheet.

The method of forming the heat ray reflecting layer and the heat ray absorbing layer to be used in the step (A) includes but is not limited to a dry coating method such as vapor deposition and sputtering, a wet coating method in which a coating solution obtained by dissolution or dispersion in a solvent is applied and then dried to form a layer, which is typified by a spin coating or roll coating, and an extrusion molding method in which a solvent-free material is melted and extruded from a die to form a thin layer. From the standpoint of productivity, continuous coating in a roll state is preferable.

With regard to the attaching method in the step (B), thermocompression, a pressure-sensitive adhesive method in which attaching is performed after a pressure-sensitive adhesive is applied to form an adhesive layer, adhesion by ultraviolet curing or thermal curing after a liquid adhesive layer is applied and formed, a plasma bonding method using no adhesive agent, or the like may be used. Although the method is not limited, thermocompression or the plasma bonding method is preferred from the standpoint of productivity. The method of attaching the heat ray reflecting layer and/or the heat ray absorbing layer to the first resin layer or the second resin layer is not limited, but a general roll lamination method is preferable. When the first resin layer is in a plate shape, it can be performed in a sheet feed method, and when it is in a roll shape, it can be performed in a roll-to-roll continuous method. The continuous method is preferable from the standpoint of productivity.

When the first resin layer is made of a thermoplastic resin and the glass transition temperature is not so high, performing thermocompression on the first resin layer side at a temperature higher than the glass transition temperature by 50°C or more, preferably 70°C or more provides good adhesion of the first resin layer to the heat ray reflecting layer and/or the heat ray absorbing layer. When the first resin layer is a thermoplastic resin having a glass transition temperature exceeding 100°C or glass, a high temperature is required at the time of thermocompression, and thus it is preferable to provide a resin layer having adhesiveness on the surface of the heat ray reflecting layer and/or the heat ray absorbing layer. The thermocompression conditions can be adjusted by adjusting the glass transition point of the resin layer having adhesiveness and heating the surface of the heat ray reflecting layer and/or the heat ray absorbing layer.

In the case of attaching through the adhesive layer, the aforementioned resin layer having adhesiveness can be employed. For the resin layer having adhesiveness, either a hotmelt type exhibiting adhesiveness by melting by heating or a liquid adhesive agent exhibiting adhesiveness by being applied in a liquid state, and attached to an adherend and then by being cured by ultraviolet ray or heat may be used. Further, an adhesive layer having a heat ray absorbing function may be formed by having the above-described heat ray absorbing material contained in the adhesive layer. The thickness of the layer having adhesiveness is not limited as long as the adhesive force with the adherend is sufficiently obtained. When it is too thin, the adhesive force is insufficient, and when it is too thick, the productivity is impaired. Thus, the thickness is preferably 0.001 to 0.05 mm.

In the attaching in the step (C), the same method as the attaching method described in the step (B) can be adopted.

The attaching step in the step (D)may be thermocompression, a pressure-sensitive adhesive method in which attaching is performed after a pressure-sensitive adhesive is applied to form an adhesive layer, adhesion and transfer by ultraviolet curing or thermal curing after a liquid adhesive layer is applied and formed. A plasma bonding method using no adhesive agent, or the like may be used. From the standpoint of productivity, thermocompression or the plasma bonding method which requires no pressure-adhesive layer or adhesive layer is preferred.

The visible light transmittance of the heat ray shielding structure in the present embodiment is evaluated by measuring the visible light transmittance at a wavelength of 380 nm to 780 nm using a spectrophotometer (Shimadzu Corporation, trade name "UV-3100") in accordance with JIS R 3106.

The total solar transmittance (Tts; Total Solar Transmittance) of the heat ray shielding structure in the present embodiment is calculated by the measurement method and the calculation formula defined in ISO13837.

The haze of the heat ray shielding structure in the present embodiment is measured using a haze meter (manufactured by Tokyo Denshoku Co., Ltd., trade name "TC-HIIIDPK") in accordance with JIS K 6714.

### Examples

Hereinafter, the present invention will be described more specifically with reference to Examples, but the invention should not be construed as being limited to the following Examples. In the present Examples, each embodiment will be described with reference to Drawings.

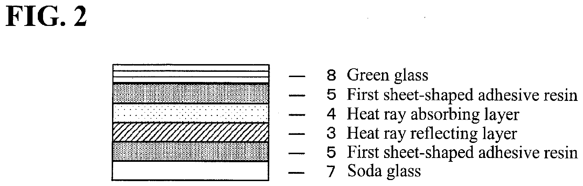

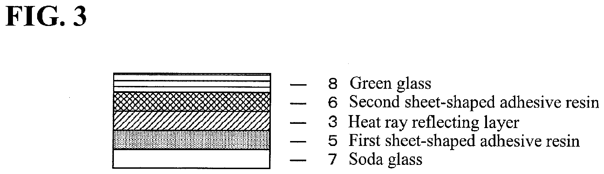

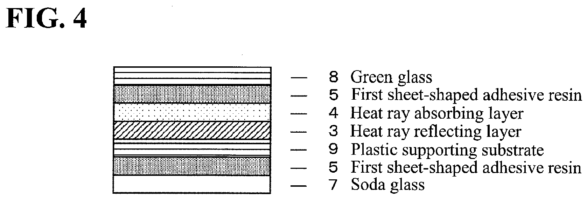

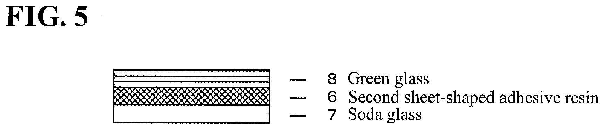

FIG. 1 is a schematic view showing an example of a layer having a heat ray shielding function on a substrate having releasability. FIG. 2 is a schematic view showing the laminated glass including the heat ray shielding structure A according to Example 1 in the configuration. FIG. 3 is a schematic view showing the laminated glass including the heat ray shielding structure B according to Example 2 in the configuration. FIG. 4 is a schematic view showing the laminated glass including the heat ray shielding structure C according to Comparative Example 1 in the configuration. FIG. 5 is a schematic view showing the laminated glass including the structure D according to Comparative Example 2 in the configuration.

### Production Example 1

### (Preparation of High-Refractive-Index Resin Coating Solution for Heat Ray Reflecting Layer)

To 7 parts by mass of toluene were added 1.4 parts by mass of titanium oxide fine particles having an average primary particle diameter of 35 nm (trade name "TTO-51A", manufactured by Ishihara Sangyo Kaisha, Ltd.), 0.4 parts by mass of KAYARAD DPHA (manufactured by Nippon Kayaku Co., Ltd.), 0.05 parts by mass of 2-methyl-1-[4-(methylthio)phenyl]-2-morpholinopropane-1-one ("Irgacure 907" manufactured by BASF Japan Ltd.) and 0.3 parts by mass of a dispersing agent (trade name "DISPERBYK-2001", manufactured by BYK Japan KK), thus preparing a high-refractive-index resin coating solution.

### (Preparation of Low-Refractive-Index Resin Coating Solution for Heat Ray Reflecting Layer)

Into a solution obtained by dissolving 0.4 parts by mass of KAYARD DPHA and 0.05 parts by mass of Irgacure 907 in 4 parts by mass of methyl ethyl ketone (MEK), 3 parts by mass of hollow silica fine particles (trade name "Sluria", an average primary particle diameter of 50 nm, a solid concentration of 20% by weight, manufactured by JGC Catalysts and Chemicals Ltd., dispersion medium: methyl isobutyl ketone) was dispersed to prepare a low-refractive-index resin coating solution.

### (Production of Resin Coating Solution for Heat Ray Absorbing Layer)

Into a solution obtained by dissolving 63.5 parts by mass of KAYARAD PET30 (manufactured by Nippon Kayaku Co., Ltd.) and 5 parts by mass of Irgacure 184 in 200 parts by mass of MEK, 30 parts by mass of tin-doped indium oxide fine particles (trade name "ITO-R", manufactured by CIK NanoTech Corporation) and 1.5 parts by mass of copper(II) 2,3-naphthalocyanine (manufactured by Sigma-Aldrich Japan G.K.) were dispersed to prepare a resin coating solution for a heat ray absorbing layer.

### Production Example 2

### (Production of Laminate A)

A 75 µm-thick polyester-made releasable film (trade name "SP2020" manufactured by Toyo Cloth Co., Ltd.) was used as a substrate 1 having releasability. A high-refractive-index resin coating solution was applied on the substrate by means of a microgravure coater (trade name "Prime Coater" manufactured by Yasui Seiki Inc.) so that a layer thickness was to be 120 nm after drying. After drying at 60°C for 1 minute, ultraviolet irradiation was performed to produce a high-refractive-index resin layer on the substrate. Subsequently, a low-refractive-index resin coating solution was applied onto the high-refractive resin layer so that a layer thickness was to be 150 nm after drying. After drying at 60°C for 1 minute, ultraviolet irradiation was performed and thus a high-refractive resin layer and a low refractive resin layer were laminated on the substrate in this order. Thereafter, similarly, a high-refractive-index resin layer, a low-refractive-index resin layer, a high-refractive-index resin layer, and a low-refractive-index resin layer were laminated in this order, and a heat ray reflecting layer composed of six layers in total was produced. Then, the resin coating solution for a heat ray absorbing layer was applied onto the heat ray reflecting layer so that a layer thickness was to be 2 µm after drying. And thus, a heat ray absorbing layer was produced. Thereby, a laminate A having a heat ray shielding layer A having a heat ray reflecting layer 3 composed of six layers and a heat ray absorbing layer 4 on the substrate 1 having releasability was produced. When the heat ray shielding layer A having a layer thickness of 2.81 µm was peeled from the substrate 1 having releasability, the heat ray shielding layer A was inferior in self-supportability, brittle and easily torn, so that the heat ray shielding layer A could not be handled alone.

### Production Example 3

### (Production of Laminate B)

A laminate B having a heat ray shielding layer B was produced in the same manner as in Production Example 2, except that the heat ray reflecting layer 3 was formed on the substrate 1 having releasability and then the heat ray absorbing layer 4 was not produced. When the heat ray shielding layer B having a layer thickness of 0.81 µm was peeled from the substrate 1 having releasability, the heat ray shielding layer B was inferior in self-supportability, brittle and easily torn, so that the heat ray shielding layer B could not be handled alone.

### Production Example 4

### (Production of Laminate C)

A laminate C was produced using a 75 µm-thick polyester film (Cosmoshine A4300, manufactured by Toyobo Co., Ltd.) (plastic supporting substrate 9) as a substrate having no releasability in Production Example 2 instead of a 75 µm-thick polyester-made releasable film (trade name "SP2020" manufactured by Toyo Cloth Co., Ltd.) as a substrate 1 having releasability. The heat ray shielding layer A having a layer thickness of 2.81 µm was fixed to the polyester film and could not be peeled off. However, the laminate had the heat ray shielding layer A on the substrate of the polyester film and could be handled as a self-supportable film.

### Production Example 5

### (Production of First Sheet-shaped Adhesive Resin 5)

A raw material for a first sheet-shaped adhesive resin was obtained by kneading and mixing 360 g of a polyvinyl butyral resin (trade name "S-LEC", manufactured by Sekisui Chemical Co., Ltd.) and 130 g of triethylene glycol bis(2-ethylbutyrate) at about 70°C for 15 minutes using a three-roll mixer. Then, extrusion molding was performed at a molding temperature of 200°C using an extrusion molding machine, thereby producing a first sheet-shaped adhesive resin 5 having a thickness of about 0.8 mm.

### Production Example 6

### (Production of Second Sheet-shaped Adhesive Resin 6)

A raw material for a second sheet-shaped adhesive resin was obtained by kneading and mixing 360 g of a polyvinyl butyral resin (trade name "S-LEC", manufactured by Sekisui Chemical Co., Ltd.) and 130 g of triethylene glycol bis(2-ethylbutyrate) added with 1.6 g of ITO fine particles (particle size of 0.02 µm or less) at about 70°C for 15 minutes using a three-roll mixer. Then, extrusion molding was performed at a molding temperature of 200°C using an extrusion molding machine, thereby producing a second sheet-shaped adhesive resin 6 having a thickness of about 0.8 mm and having a heat ray absorbing property.

### Example 1

### (Production of Laminated Glass Including Heat Ray Shielding Structure A in Configuration)

The first sheet-shaped adhesive resin 5 produced in Production Example 5 as a first resin layer was thermally adhered on the surface of the heat ray absorbing layer 4 of the laminate A produced in Production Example 2 using a roll laminator. The temperature of the laminator roll was 140°C, the nip pressure was 0.2 MPa, and the conveying speed was 0.7 m/min. After the thermal adhesion, the substrate 1 having releasability was peeled from the laminate, and the heat ray shielding layer was disposed on the first resin. Then, the surface of the heat ray reflecting layer 3 and the first sheet-shaped adhesive resin 5 produced in Production Example 5 as the second resin layer were thermally adhered using a roll laminator to produce a heat ray shielding structure A. The temperature of the laminator roll was 140°C, the nip pressure was 0.2 MPa, and the conveying speed was 0.7 m/min. Next, 2 m-thick soda glass 7, the heat ray shielding structure A, and 2 mm-thick green glass 8 were superposed in this order and then placed in a vacuum bag, and the pressure was reduced to -0.09 MPa using a vacuum pump. Thereafter, the whole was held at 110°C for 30 minutes under reduced pressure and thus subjected to preliminary compression. After the preliminary compression, it was held in an autoclave under the conditions of a pressure of 1.5 MPa and a temperature of 150°C for 30 minutes to perform a full compression. Thereafter, by returning to normal temperature and normal pressure, a laminated glass including the heat ray shielding structure A according to the present invention in the configuration was produced (see FIG. 2).

### Example 2

### (Production of Laminated Glass Including Heat Ray Shielding Structure B in Configuration)

The heat ray reflecting layer 3 was arranged on the first resin in the same manner as in Example 1 except that the laminate B produced in Production Example 3 was used instead of the laminate A in Example 1. Next, the surface of the heat ray reflecting layer 3 and the first sheet-shaped adhesive resin 6 produced in Production Example 6 as the second resin layer were thermally adhered using a roll laminator to produce a heat ray shielding structure B. The temperature of the laminator roll was 140°C, the nip pressure was 0.2 MPa, and the conveying speed was 0.7 m/min. Subsequently, 2 m-thick soda glass 7, the heat ray shielding structure B, and 2 mm-thick green glass 8 were superposed in this order and then placed in a vacuum bag, and the pressure was reduced to -0.09 MPa using a vacuum pump. Thereafter, the whole was held at 110°C for 30 minutes under reduced pressure and thus subjected to preliminary compression. After the preliminary compression, it was held in an autoclave under the conditions of a pressure of 1.5 MPa and a temperature of 150°C for 30 minutes to perform a full compression. Thereafter, by returning to normal temperature and normal pressure, a laminated glass including the heat ray shielding structure B according to the present invention in the configuration was produced (see FIG. 3).

### Comparative Example 1

Two meter-thick soda glass 7, the first sheet-shaped adhesive resin 5, the laminate C produced in Production Example 4, the first sheet-shaped adhesive resin 5, and 2 mm-thick green glass 8 were superposed in this order and then placed in a vacuum bag, and the pressure was reduced to -0.09 MPa using a vacuum pump. Thereafter, the whole was held at 110°C for 30 minutes under reduced pressure and thus subjected to preliminary compression. After the preliminary compression, it was held in an autoclave under the conditions of a pressure of 1.5 MPa and a temperature of 150°C for 30 minutes to perform a full compression. Thereafter, by returning to normal temperature and normal pressure, a laminated glass including the heat ray shielding structure C for comparison in the configuration including the plastic supporting substrate 9 in the structure was produced (see FIG. 4).

### Comparative Example 2

Two meter-thick soda glass 7, the second sheet-shaped adhesive resin 6, and 2 mm-thick green glass 8 were superposed in this order and then placed in a vacuum bag, and the pressure was reduced to -0.09 MPa using a vacuum pump. Thereafter, the whole was held at 110°C for 30 minutes under reduced pressure and thus subjected to preliminary compression. After the preliminary compression, it was held in an autoclave under the conditions of a pressure of 1.5 MPa and a temperature of 150°C for 30 minutes to perform a full compression. Thereafter, by returning to normal temperature and normal pressure, a laminated glass including the structure D for comparison in which the sheet-shaped adhesive resin layer had a heat ray absorbing function was produced (see FIG. 5).

The visible light transmittance, the total solar radiation transmittance (Tts), and the haze of the heat ray shielding structures A to C of Example 1, Example 2, and Comparative Example 1 and the structure D of Comparative Example 2 were measured by the following methods.

### (Measurement of Visible Light Transmittance)

The visible light transmittance of the obtained heat ray shielding structure was measured at a wavelength of 380 nm to 780 nm using a spectrophotometer (Shimadzu Corporation, trade name "UV-3100") in accordance with JIS R 3106.

### (Measurement of Total Solar Transmittance (Tts))

The total solar transmittance (Tts; Total Transparent Transmittance) is a measure of a degree of thermal energy transmitted through a material to be measured relative to thermal energy from the sun (total solar energy). The total solar transmittance (Tts) of the heat ray shielding structure was calculated by the measurement method and the calculation formula defined in IS013837. It is shown that a smaller numerical value of the calculated total solar transmittance of the heat ray shielding structure equates to smaller total solar energy transmitted through the heat ray shielding structure and thus equates to higher heat ray shielding performance of the heat ray shielding structure. At the time of measuring the transmittance and the reflectivity on a spectrophotometer, the incident light was made incident from the soda glass side (outside air side).

### (Measurement of Haze)

The haze of the obtained heat ray shielding structure was measured using a haze meter (manufactured by Tokyo Denshoku Co., Ltd., trade name: "TC-HIIIDPK") in accordance with JIS K 6714.

Table 1 shows the measurement results of the visible light transmittance, the total solar transmittance, and the haze of the heat ray shielding structures A to C of Examples 1 and 2 and Comparative Example 1, and the structure D of Comparative Example 2.

### [Table 1]

**Table 1**

| | Visual light transmittance | Tts | Haze |
|---|---|---|---|
| Example 1 (heat ray shielding structure A) | 73.5% | 49.0% | 0.4 |
| Example 2 (heat ray shielding structure B) | 73.8% | 49.8% | 0.4 |
| Comparative Example 1 (heat ray shielding structure C) | 73.2% | 49.8% | 1.0 |
| Comparative Example 2 (structure D) | 74.0% | 57.4% | 0.6 |

According to Table 1, since the heat ray shielding structure does not include a supporting substrate in Example 1, the haze is low and the transparency is excellent as compared with Comparative Example 1. In Comparative Examples 1, since a polyester film as a supporting substrate is included in the structure, the haze is high and the transparency is impaired.

In the heat ray shielding structure B of Example 2, since the heat ray reflecting layer 3 is transferred, a heat ray shielding function through reflection can be easily imparted, and the total solar transmittance is greatly improved without impairing the visible light transmittance as compared with the structure D of Comparative Example 2.

The heat ray shielding structures of Example 1 and Example 2 are excellent in productivity because they can be produced only by transferring a heat ray shielding layer continuously produced in a roll shape to a window material.

While the present invention has been described in detail with reference to specific embodiments, it will be apparent to one skilled in the art that various changes and modifications can be made without departing from the spirit and scope of the invention.

The present application is based on Japanese Patent Application No. 2018-32984 filed on February 27, 2018, which is incorporated herein by reference in its entirety. Also, all the references cited herein are incorporated as a whole.

### Industrial Applicability

Laying the heat ray shielding structure of the present invention on a window glass of a house or an automobile allows for suppressing a temperature rise in the space of the house or automobile, reducing the load on air conditioners of the house or automobile, and contributing to energy saving and global environmental problems. Furthermore, the heat ray shielding structure of the present invention is applicable to window members for buildings, window members for vehicles, window glasses of refrigerating and freezing showcases, IR cut filters, and the like.

### Description of Reference Numerals and Signs

1: Substrate having releasability, 2: Heat ray shielding layer, 3: Heat ray reflecting layer, 4: Heat ray absorbing layer, 5: First sheet-shaped adhesive resin, 6: Second sheet-shaped adhesive resin, 7: Soda glass, 8: Green glass, 9: Plastic supporting substrate

## Claims

1. A heat ray shielding structure comprising a heat ray shielding layer between a first resin layer and a second resin layer,
wherein the heat ray shielding layer is a heat ray reflecting layer which is a first heat ray reflecting layer having a repeated multilayer structure of a high-refractive-index layer and a low-refractive-index layer or which is a second heat ray reflecting layer containing at least any one of Au, Ag, Cu and Al,
a heat ray absorbing layer containing at least one of an inorganic oxide and a coloring matter and containing a binder resin, or
a layer including the heat ray reflecting layer and the heat ray absorbing layer.

2. A method for producing a heat ray shielding structure comprising the following steps:
(A) a step of obtaining a first laminate by:
laminating a heat ray reflecting layer which is a first heat ray reflecting layer having a repeated multilayer structure of a high-refractive-index layer and a low-refractive-index layer or which is a second heat ray reflecting layer containing at least any one of Au, Ag, Cu and Al on a substrate having releasability,
laminating a heat ray absorbing layer containing at least one of an inorganic oxide and a coloring matter and containing a binder resin, on the substrate having releasability, or
laminating any one of the heat ray reflecting layer and the heat ray absorbing layer on the substrate having releasability and further laminating any another one of the heat ray reflecting layer and the heat ray absorbing layer on any one of the heat ray reflecting layer and the heat ray absorbing layer,
(B) a step of obtaining a second laminate by attaching the heat ray reflecting layer or the heat ray absorbing layer of the first laminate obtained in the step (A) to a first resin layer and then peeling off the substrate having releasability to arrange the heat ray reflecting layer or the heat ray absorbing layer on the first resin layer, and
(C) a step of obtaining a heat ray shielding structure by attaching the heat ray reflecting layer or the heat ray absorbing layer of the second laminate obtained in the step (B) to a second resin layer to arrange the heat ray reflecting layer or the heat ray absorbing layer on the second resin layer.

3. A method for producing a heat ray shielding structure according to claim 2, wherein the substrate having releasability has a peeling force of 1000 mN/25 mm or more and 5000 mN/25 mm or less in a 180° peeling test at a speed of 300 mm/min between an adhesive tape having a width of 25 mm and the substrate having releasability.

4. A laminated glass comprising a heat ray shielding structure in the configuration, the laminated glass comprising a first glass sheet, the heat ray shielding structure according to claim 1, and a second glass sheet in this order.

5. A method for producing a laminated glass, comprising the steps (A), (B) and (C) according to claim 2 and further comprising the following step:
(D) a step of arranging the heat ray shielding structure obtained in the step (C) according to claim 2 between a first glass sheet and a second glass sheet.

6. The method for producing a laminated glass according to claim 5, wherein the substrate having releasability has a peeling force of 1000 mN/25 mm or more and 5000 mN/25 mm or less in a 180° peeling test at a speed of 300 mm/min between an adhesive tape having a width of 25 mm and the substrate having releasability.

7. A window comprising the laminated glass according to claim 4.
